# EUROPEAN PATENT SPECIFICATION

(11) **EP 0 647 297 B1**
(45) Date of publication and mention of the grant of the patent: **12.03.1997**
(21) Application number: 93915835.8
(22) Date of filing: 02.07.1993
(51) Int. Cl.: F16H 29/04

(54) **Speed variator**
Stufenloses Getriebe
Variateur de vitesse

(30) Priority: 03.07.1992 NL 9201194
(43) Date of publication of application: 12.04.1995
(73) Proprietor: MASONI, Pietro, I-56029 Santa Croce sull'Arno (IT)
(72) Inventor: MASONI, Pietro, I-56029 Santa Croce sull'Arno (IT)
(74) Representative: Smulders, Theodorus A.H.J., Ir.
(86) International application number: EP9301771
(87) International publication number: WO9401698

(56) References cited:
- WO-A-90/14530
- DE-C- 822 642
- GB-A- 2 131 900
- US-A- 2 051 783
- US-A- 2 508 971
- US-A- 2 864 259
- US-A- 4 194 407

## Description

This invention relates to a speed variator according to the precharacterizing portion of claim 1.

Such a device is known from US-A-2 864 259. US-A-4 194 407 discloses a variable speed transmission which does not have all the features mentioned in the preamble of claim 1 but which is of the variable throw crank type, and which comprises a plurality of unidirectional drive s ystems which are reversible in order to reverse the rotational direction of the output shaft.

A drawback of the speed variator known from the above-mentioned publications is the control device incorporated in the drive shaft. Inasmuch as this control device is of mechanical construction, the assembly thereof is very complicated. Further, the known control device is subject to wear and must therefore be checked periodically and revised if necessary. Moreover, the costs of manufacture of the known control device are high, owing to the great number of parts from which it is composed.

For some applications, the device known from US-A-2 864 259 has the drawback that, independently of the direction of rotation of the input shaft, the output shaft always has the same direction of rotation. In order to enable the output shaft to be rotated in both directions, therefore, a separate rotational-direction reversing box must be connected to the output shaft. Apart from the additional costs which such a box brings with it, this box has a further disadvantage in that it introduces an additional source of friction and that, further, often a friction or fluid clutch is necessary to enable the direction of motion of the output shaft to be reversed.

The object of the invention is to provide a speed variator without the drawbacks mentioned above.

To that end, a speed variator of the type described in the preamble is characterized by features in the characterizing portion of claim 1.

Inasmuch as the control device for the eccentric discs, which is incorporated in the drive shaft, is of hydraulic, pneumatic or electromechanical construction, the number of parts thereof is considerably smaller compared with the known mechanical control device and the costs of manufacture of such a control device are significantly lower. At the same time, the assembly of the control device according to the invention is considerably simpler. Further, the hydraulic, pneumatic or electromechanical control device is hardly subject to wear and accordingly the invention provides a durable, reliably operating control device. Further, in such a speed variator, the direction of rotation of the output shaft is reversible without this necessitating the provision of additional reversal stages in the form of gearwheels in the device and hence without additional friction being introduced. Moreover, the hydraulic, pneumatic or electromechanical control device makes it readily possible to couple the reversing function of the unidirectional drive systems to it.

To that end, the speed variator is characterized, according to a further embodiment of the invention, by the features of claim 2.

Such a provision makes it impossible for the output shaft of the speed variator to be set into motion during reversal of the unidirectional drive system. This safety measure is necessary to prevent the output shaft, in case it rotates after the unidirectional drive systems have been reversed, from tending to impart rotation to the crank arms of the circumferential units, thereby damaging the speed variator irreparably.

To provide for better distribution of the power to be transmitted to the intermediate shafts, and hence to enable greater power transmission, the speed variator is characterized, according to a further elaboration of the invention, by the features of claim 3.

According to a further elaboration of the invention, the speed variator is characterized by the features of claim 4.

A double-acting drive system of this construction is simple to operate and takes up as little space as a normal single-acting freewheel system. Further, the construction of such a unidirectional drive system is simple, so that it is durable and reliable in operation. Further, the present reversible unidirectional drive system in no way introduces any additional sources of friction into the speed variator. It should be noticed that a double-acting freewheel of this type is known per se from GB-A-2 131 900 wherein such a freewheel is disclosed for use in a differential mechanism.

According to a further embodiment of the invention, it is particularly advantageous when the variator is characterized by the features of claim 5.

The coupling of the hydraulically, pneumatically or electromechanically operable reversing rings can be realized in a simple manner via a central hydraulic, pneumatic or electromechanical operating device.

According to a further elaboration of the invention, a speed variator of the type described hereinabove is further characterized by the features of claim 6.

A control device of this construction is durable and reliable in operation. The piston/cylinder assemblies can be positioned in such a way that the piston rods engage the eccentric discs centrally, so that the eccentric discs can be shifted in radial direction without being pulled out of square.

Moreover, the assembly of the present control device is simple and the shaft is minimally weakened inasmuch as the space required to build in the control device is minimal. Accordingly, the diameter of the input shaft can be made of smaller dimensions than in the known device. The spring arranged in the respective cylinders serves as a safety measure and ensures that when the pressure of the pressure medium sources falls out, the eccentric discs are pressed into the neutral position so that no torque of the input shaft is transmitted to the output shaft.

According to a further embodiment of the invention, the speed variator is characterized by the features of claim 7.

To clarify the invention, one embodiment of the variable speed device will be described with reference to the accompanying drawings.
Fig. 1 is a partial sectional view of an embodiment of the speed variator;

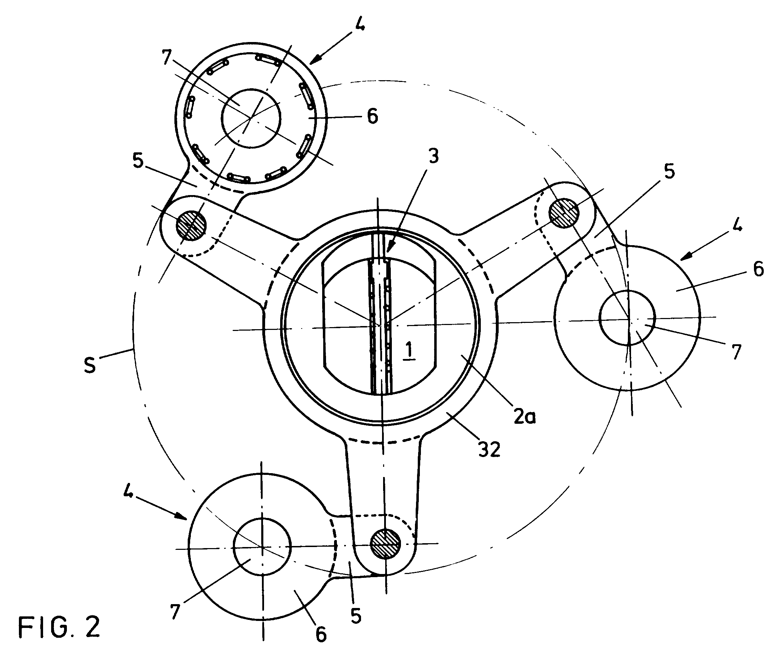

Fig. 2 is a schematic sectional view taken on line II-II of Fig. 1;
Fig. 3 is a detail of a reversible unidirectional drive system incorporated in a circumferential unit;
Fig. 4 is a detail of the sectional view shown in Fig. 2 and shows the control device for the eccentric discs, incorporated in the drive shaft; and
Fig. 5 is a detail from Fig. 1 and shows the pressure medium source connection to the channels of the control device in the drive shaft.

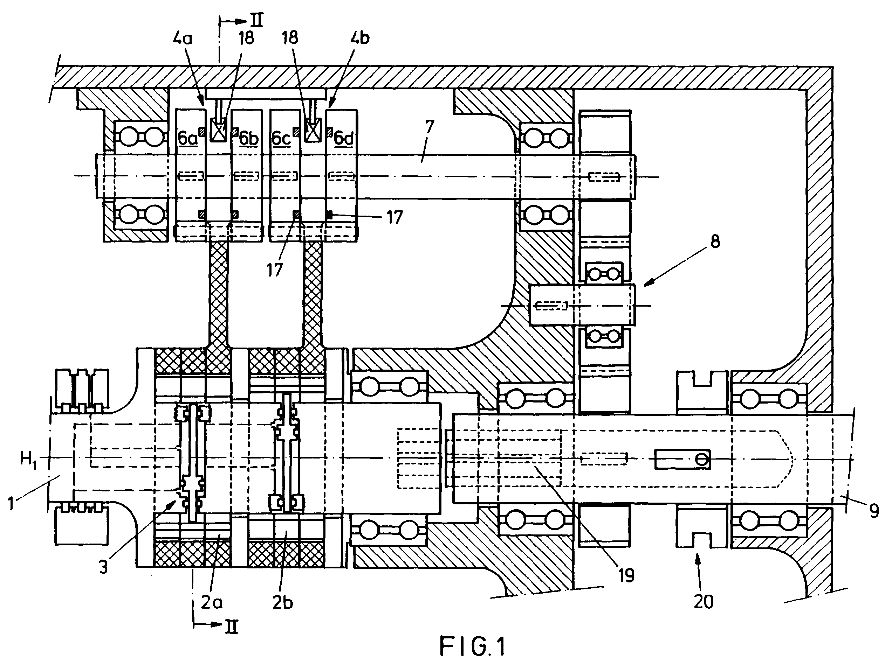

The drawing shows a preferred embodiment of the speed variator according to the invention. Fig. 1 shows a partial sectional view. The speed variator comprises a drive shaft 1 which is provided with at least one pair of eccentric discs 2a, 2b, whose eccentricity can be varied, also during operation, from a neutral position of zero eccentricity to a maximum value via a control device 3 incorporated in the drive shaft. The eccentricities of the eccentric discs 2a, 2b are mutually opposite. A plurality of circumferential units 4a, 4b are arranged on a pitch circle S whose centre coincides with the centreline H1 of the drive shaft 1 and which is located in, or in the vicinity of, a plane in which the eccentric discs 2a, 2b can oscillate during operation. The circumferential units are each provided with a crank arm 5 which can be driven for oscillation by one of the eccentric discs 2a, 2b. The crank arms 5 of the respective circumferential units are each dynamically connected to an output shaft 9 via at least one unidirectional drive system 6, consisting of a freewheel system 6, via respective intermediate shafts 7 and a transmission 8 with a fixed transmission ratio. Mounted on each intermediate shaft 7 are two circumferential units 4a, 4b, namely one for each eccentric disc 2a, 2b. The fixed transmission ratio of the transmission 8, which in this case is formed by three gears, can be 1:1 as well as overdrive, for instance 1:2. According to the invention, the respective unidirectional drive systems 6 can be reversed inasmuch as they are provided with a double-acting freewheel system 6 which is adapted for driving the respective intermediate shafts 7 in a first direction of drive and in a second, opposite direction of drive. The control device 3 for the eccentric discs 2a, 2b, incorporated in the drive shaft is of hydraulic, pneumatic or electromechanical construction and the respective unidirectional drive systems 6 can only be reversed when the rotational speed of the output shaft 9 is zero. By coupling the hydraulic control device 3 of the eccentric discs 2a, 2b to the unidirectional drive systems 6, it can be ensured that these systems 6 can only be reversed when the eccentric discs 2a, 2b are in the neutral position.

The rotational speed of the output shaft 9 depends on the extent of eccentricity of the eccentric discs 2a, 2b. When the eccentric discs 2a, 2b are in the neutral position, the output shaft 9 is stationary even when the drive shaft 1 is rotating. When the output shaft 9 continues to rotate in its normal direction of drive due to inertia forces or is caused to rotate by the load coupled thereto (not shown), the output shaft 9 rotates freely together with the intermediate shafts 7. The rotation of the intermediate shafts 7 is not transmitted to the crank arms 5 owing to the interposition of the freewheel clutches 6. The speed variator thus operates as a freewheel clutch. When the drive shaft 1 and the output shaft 9 have an equal speed, they can be interconnected via a fixed coupling 19, which is known per se, so as to effect a direct drive. Preferably, this coupling occurs hydraulically or pneumatically. However, a mechanical operation of this fixed coupling 19 is also possible. Such a construction is shown in the drawing and is indicated by the reference numeral 20.

In order to distribute the power transmission to the intermediate shafts 7 as well as possible, and in order to enable a large power to be transmitted to each intermediate shaft 7, each circumferential unit 4 of the speed variator comprises two reversible unidirectional drive systems 6a, 6b, and 6c, 6d, respectively. In the embodiment shown, therefore, each intermediate shaft is fitted with four reversible unidirectional drive systems 6a, 6b, 6c, 6d.

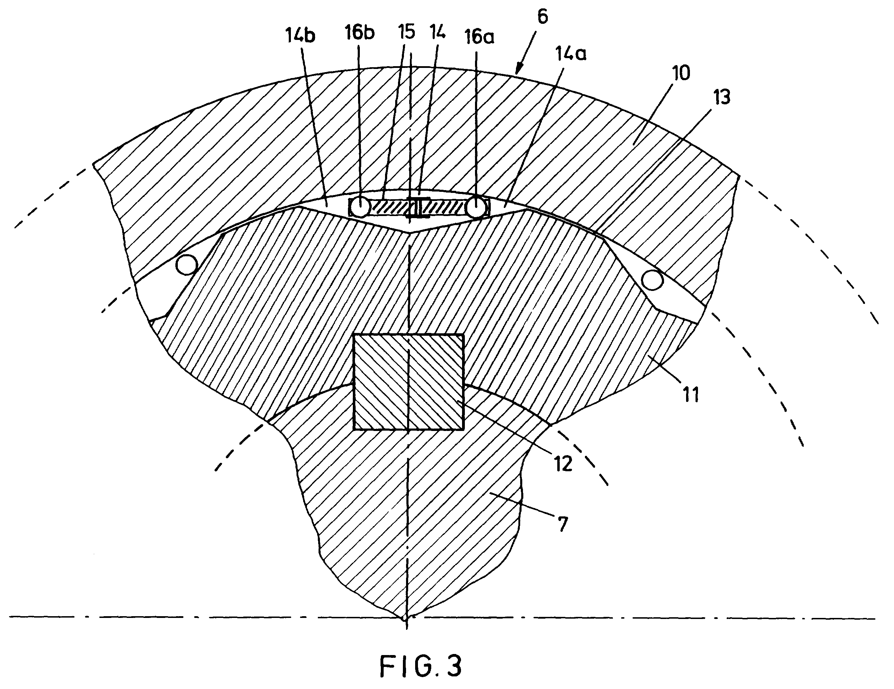

As is clearly shown in Fig. 3, which is a sectional detail of a unidirectional drive system 6 of a circumferential unit 4, each unidirectional drive system 6 comprises an outer ring 10 which carries a crank arm 5 as mentioned and an inner ring 11 which, for instance through a key 12, is connected to a corresponding intermediate shaft 7 so as to be restrained from rotation relative thereto. The outer ring 10 and the inner ring 11, via, respectively, an inner and outer circumferential surface thereof, at least partly share a common circumferential contact surface 13. Provided in the circumferential contact surface 13 are recesses 14 which are substantially diamond-shaped, viewed in a side elevation taken in a cross-sectional plane extending perpendicularly to the centreline of the corresponding intermediate shaft 7. Arranged in each recess is a frame 15 carrying two resiliently supported balls or cylinders 16a, 16b. Within a recess 14, each frame 15 has two fixed positions which can be set via a reversing ring 17 (see Fig. 1). In a first position, as shown, one of the balls or cylinders 16a of the frame 15 is resiliently pressed into a corner 14a of the recess 14. The corner 14a is bounded by the outer ring 10 and the inner ring 11. The other ball or cylinder 16b is kept clear of the walls of the recess 14 by the frame 15. In a second position of the frame 15, the other ball or cylinder 16b of the frame 15 is resiliently pressed into the opposite corner 14b of the recess 14 while the one ball or cylinder 16a is kept clear of the frame 15 of the walls of the recess 14.

The operation of the reversing ring 17 is for instance effected by means of a reversing arm 18 arranged in the housing of the speed variator, which reversing arm 18 can temporarily engage projections provided on the reversing ring 17. According to the invention, it is particularly advantageous when the operation of the respective reversing rings 17 is hydraulic, pneumatic or electromechanical, while the hydraulic, pneumatic or electromechanical control device 3 for the pair of eccentric discs 2a, 2b is hydraulically, pneumatically or electromechanically coupled to the operation of the reversing rings 17. Thus, via the hydraulic, pneumatic, or electromechanical operation, it can be provided that the reversing rings 17 are only operated when the eccentric discs 2a, 2b are in the neutral position and the speed of the output shaft is zero.

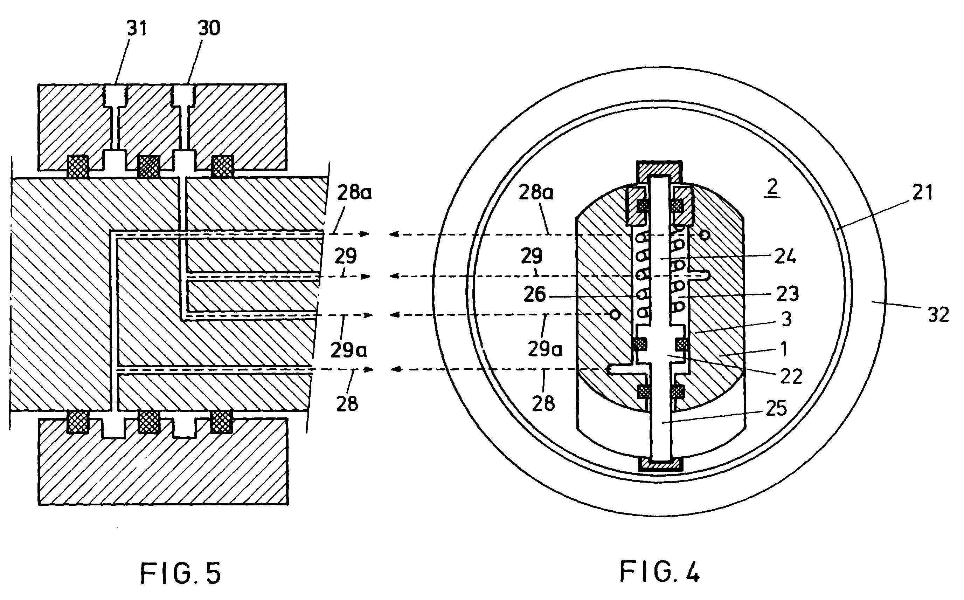

As shown clearly in Fig. 4, the eccentric discs 2 are connected to the drive shaft so as to be restrained from rotation and they have a circular circumferential surface. The eccentric discs are arranged to be shifted perpendicularly to the centreline of the drive shaft. On the circular circumferential surface of each eccentric disc 2, with interposition of roller or plain bearings 21, at least one ring 32 is present, which ring 32 does not rotate and is dynamically connected to the crank arms 5 of the respective circumferential units 4. The hydraulic, pneumatic or electromechanical control device 3 for the pair of eccentric discs 2 is incorporated in the drive shaft. The control device 3 comprises two piston/cylinder assemblies 3 extending perpendicularly to the centreline of the drive shaft 1, which assemblies each control one of the eccentric discs of the eccentric pair 2a, 2b in mutually opposite directions. The piston 22 of the respective piston/cylinder assemblies 3 comprises two piston rods 24, 25, extending on opposite sides of the piston 22 in the direction of the centreline of the respective cylinders 23 or precision bores. Confined within the cylinder of the respective piston/cylinder assemblies 3 is a precompressed spring 26, which presses the piston 22 into a position wherein the eccentric discs 2a, 2b are in a neutral position. Each cylinder 23 is connected to two channels 28, 29, and 28a, 29a, respectively, which open into the cylinder 23 on opposite sides of the piston 22 and are each connected with hydraulic or pneumatic pressure medium sources 30, 31 via bores 28, 29, and 28a, 29a, respectively, provided in the drive shaft (see Fig. 5). By means of the pressure medium sources 30, 31, the position of the piston 22 in the cylinder 23, and hence the eccentricity of the eccentric discs 2a, 2b, is controllable.

For reasons of safety, the channels 29, 29a, which open into the cylinder space 23 where the spring 26 is arranged, are connected to a first pressure medium source 30 and the channels 28, 28a, which open into the cylinder space 23 located on the other side of the piston 22, are connected to a second pressure medium source 31, the first pressure medium source 30 supplying a constant basic pressure which biases the eccentric discs 2a, 2b into the neutral position and the second pressure medium source 31 having a variable, controllable pressure by means of which the extent of eccentricity of the eccentric discs 2a, 2b can be controlled. Thus, double safety is provided through the constant basic pressure of pressure medium source 30 and the pressure of the spring 26, so that the eccentric discs can be moved from the neutral position only by positive action, namely by increasing the pressure of pressure medium source 31 to above the pressure of pressure medium source 30.

## Claims

1. A speed variator comprising a drive shaft (1) provided with at least one pair of eccentric discs (2a, 2b) whose eccentricity can be varied, also during operation, from a neutral position of zero eccentricity to a maximum value by means of a control device (3) incorporated in the drive shaft (1), the eccentricity of the respective discs (2a, 2b) being mutually opposite, while a plurality of circumferential units (4a, 4b) are arranged on a pitch circle (S) whose centre coincides with the centreline (Hl) of the drive shaft (1) and which is located in, or in the vicinity of, a plane in which the eccentric discs can oscillate during operation, said circumferential units (4a, 4b) each comprising a crank arm (5) which can be driven for oscillation by one of the eccentric discs (2a, 2b), the crank arms (5) of the respective circumferential units (4a, 4b) each being dynamically connected to an output shaft (9) via at least one unidirectional drive system (6), consisting of a freewheel system (6), via respective intermediate shafts (7) and a transmission (8) with a fixed transmission ratio, characterized
- in that the control device (3) for the eccentric discs (2a, 2b), incorporated in the drive shaft (1), is of hydraulic or pneumatic construction which is operatively connected to hydraulic or pneumatic medium sources (30, 31) provided outside of the drive shaft (1), and
- in that the respective unidirectional drive systems (6a, 6b, 6c, 6d) are reversible in that they comprise a double-acting freewheel system (6) which is adapted for driving the respective intermediate shafts (7) in a first direction of drive and in a second, opposite direction of drive, the respective unidirectional drive systems (6a, 6b, 6c, 6d) being reversible only when the rotational speed of the output shaft (9) is zero.

2. A speed variator according to claim 1, characterized in that the hydraulic or pneumatic control device (3) of the eccentric discs (2a, 2b) is coupled to the respective unidirectional drive systems (6a, 6b, 6c, 6d) in such a way that said systems are reversible only when the eccentric discs (2a, 2b) are in the neutral position.

3. A speed variator according to claim 1 or 2, characterized in that each circumferential unit (4a, 4b) comprises at least two reversible unidirectional drive systems (6a, 6b, and 6c, 6d, respectively).

4. A speed variator according to anyone of claims 1-3,
characterized in that each reversible unidirectional drive system (6a, 6b, 6c, 6d) comprises an outer ring (10) carrying an associated crank arm (5) and an inner ring (11) connected to an associated intermediate shaft (7) so as to be restrained from rotation relative thereto, while the outer ring (10) and the inner ring (11), respectively by way of an inner and an outer circumferential surface thereof, at least partly share a common circumferential contact surface (13), which is provided with recesses (14) which have a substantially diamond-shaped section, viewed in a side elevation of a cross-sectional plane extending perpendicularly to the centreline of the associated intermediate shaft (7), each recess (14) accommodating a frame (15) carrying two resiliently supported balls or cylinders (16a, 16b), each frame (15) having two fixed positions within a recess (14) which can be set via a reversing ring (17), whereby, in a first position, one of the balls or cylinders (16a) of the frame is pressed resiliently into a corner (14a) of the recess (14), which corner (14a) is bounded by the outer ring (10) and the inner ring (11), while the frame (15) keeps the other ball or cylinder (16b) clear of the walls of the recess (14) and, in a second position, the other ball or cylinder (16b) of the frame (15) is pressed resiliently into the opposite corner (14b) of the recess (14) while the frame (15) keeps the one ball or cylinder (16a) clear of the walls of the recess (14).

5. A speed variator according to claim 4, characterized in that the operation of the respective reversing rings (17) is hydraulic or pneumatic and the hydraulic or pneumatic control device (3) for the pair of eccentric discs (2a, 2b) is hydraulically or pneumatically coupled thereto.

6. A speed variator according to anyone of claims 1-5,
characterized in that the eccentric discs (2a, 2b) are each formed by a circular eccentric disc connected to the drive shaft (1) so as to be restrained from rotation relative thereto, which disc is adapted to be shifted in a direction perpendicular to the centreline of the drive shaft (1), while, with interposition of roller or plain bearings (21), at least one ring (32) is present on each eccentric disc (2a, 2b), which ring (32) does not rotate and is dynamically connected to the crank arms (5) of the respective circumferential units (4a, 4b), the hydraulic or pneumatic control device (3) for the pair of eccentric discs (2a, 2b), incorporated in the drive shaft (1), comprises two piston/cylinder assemblies (3) extending perpendicularly to the centreline of the drive shaft (1), each control device (3) controlling one of the pair of eccentric discs (2a, 2b) in opposite directions, the piston (22) of the respective piston/cylinder assemblies (3) being provided with piston rods (24, 25) extending on opposite sides of the piston (22) in the direction of the centreline of the respective cylinders or precision bores (23), a precompressed spring (26) being confined in the cylinder (23) of the respective piston/cylinder assemblies (3), said spring (26) pressing the piston (22) into a position wherein the eccentric discs (2a, 2b) are in a neutral position, and each cylinder (23) being connected with two channels (28, 29, and 28a, 29a, respectively) each opening into the cylinder (23) on opposite sides of the piston (22) and each being connected, via bores (28, 29, and 28a, 29a, respectively) provided in the drive shaft (1), with said hydraulic or pneumatic pressure medium sources (30, 31) by means of which the position of the piston (22) in the cylinder (23), and hence the eccentricity of the eccentric discs (2a, 2b), can be controlled.

7. A speed variator according to claim 6, characterized in that the channels (29, 29a) opening into the cylinder space (23) where the spring (26) is disposed are connected to a first pressure medium source (30) and the channels (28, 28a) opening into the cylinder space (23) located on the other side of the piston (22) are connected to a second pressure medium source (31), said first pressure medium source (30) providing a constant basic pressure which biases the eccentric discs (2a, 2b) into the neutral position and said second pressure medium source (31) having a variable, controllable pressure by means of which the extent of eccentricity of the eccentric discs (2a, 2b) can be controlled.

## Patentansprüche

1. Drehzahlwandler mit einer Antriebswelle (1), die mit wenigstens einem Paar exzentrischer Scheiben (2a, 2b) versehen ist, deren Exzentrizität auch während des Betriebs von einer neutralen Position mit null Exzentrizität zu einem Maximalwert mittels einer Steuervorrichtung (3) veränderbar ist, die in der Antriebswelle (1) vorgesehen ist, wobei die Exzentrizität der jeweiligen Scheiben (2a, 2b) einander entgegengesetzt ist, wobei mehrere Umfangseinheiten (4a, 4b) auf einem Teilkreis (S) angeordnet sind, dessen Mitte mit der Mittellinie (H1) der Antriebswelle (1) zusammenfällt und in oder in der Nähe einer Ebene angeordnet ist, in der die exzentrischen Scheiben während des Betriebs oszillieren können, wobei die Umfangseinheiten (4a, 4b) jeweils einen Kurbelarm (5) aufweisen, der durch eine der exzentrischen Scheiben (2a, 2b) oszillierend antreibbar ist, wobei die Kurbelarme (5) der jeweiligen Umfangseinheiten (4a, 4b) jeweils über wenigstens ein unidirektionales Antriebssystem (6), das aus einem Freilaufsystem (6) besteht, über jeweilige Zwischenwellen (7) und ein Getriebe (8) mit festern Übersetzungsverhältnis dynamisch mit einer Abtriebswelle (9) verbunden sind, dadurch gekennzeichnet, daß
die in der Antriebswelle (1) enthaltene Steuervorrichtung (3) der exzentrischen Scheiben (2a, 2b) von hydraulischer oder pneumatischer Konstruktion ist, die betriebsmäßig mit Quellen (30, 31) eines hydraulischen oder pneumatischen Mediums verbunden ist, die außerhalb der Antriebswelle (1) vorgesehen sind, und
die jeweiligen unidirektionalen Antriebssysteme (6a, 6b, 6c, 6d) dadurch reversibel sind, daß sie ein doppelt wirkendes Freilaufsystem (6) aufweisen, das in der Lage ist, die jeweiligen Zwischenwellen (7) in einer ersten Antriebsrichtung und in einer zweiten, entgegengesetzten Antriebsrichtung zu treiben, wobei die jeweiligen unidirektionalen Antriebssysteme (6a, 6b, 6c, 6d) nur reversibel sind, wenn die Drehzahl der Abtriebswelle (9) null ist.

2. Drehzahlwandler nach Anspruch 1, dadurch gekennzeichnet, daß die hydraulische oder pneumatische Steuervorrichtung (3) der exzentrischen Scheiben (2a, 2b) mit den jeweiligen unidirektionalen Antriebssystemen (6a, 6b, 6c, 6d) derart gekoppelt ist, daß die Systeme nur reversibel sind, wenn sich die exzentrischen Scheiben (2a, 32b) in der neutralen Position befinden.

3. Drehzahlwandler nach Anspruch 1 oder 2, dadurch gekennzeichnet, daß jede Umfangseinheit (4a, 4b) wenigstens zwei reversible unidirektionale Antriebssysteme (6a, 6b bzw. 6c, 6d) aufweist.

4. Drehzahlwandler nach einem der Ansprüche 1-3, dadurch gekennzeichnet, daß jedes reversible unidirektionale Antriebssystem (6a, 6b, 6c, 6d) einen Außenring (10) mit einem zugehörigen Kurbelarm (5) und einen Innenring (11) aufweist, der derart mit einer zugehörigen Zwischenwelle (7) verbunden ist, daß er in bezug zu dieser nicht drehbar ist, wobei der Außenring (10) und der Innenring (11) jeweils durch eine Innen- und eine Außenumfangsfläche wenigstens teilweise eine gemeinsame Kontaktumfangsfläche (13) haben, die mit Ausnehmungen (14) versehen ist, deren Querschnitt, in Seitenansicht einer sich senkrecht zur Mittellinie der zugehörigen Zwischenwelle (7) erstreckenden Querschnittsebene gesehen, im wesentlichen rautenförmig ist, wobei jede Ausnehmung (14) einen Rahmen (15) aufnimmt, der zwei federnd gestützte Kugeln oder Zylinder (16a, 16b) aufweist, wobei jeder Rahmen (15) zwei feste Positionen innerhalb einer Ausnehmung (14) hat, die über einen Reversierring (17) einstellbar sind, wobei eine der Kugeln oder einer der Zylinder (16a) des Rahmens in der ersten Position federnd in eine Ecke (14a) der Ausnehmung (14) gedrückt wird, wobei die Ecke (14a) von dem Außenring (10) und dem Innenring (11) begrenzt ist, während der Rahmen (15) die andere Kugel oder den anderen Zylinder (16b) von den Wänden der Ausnehmung (14) fernhält, und wobei in der zweiten Position die andere Kugel oder der andere Zylinder (16b) des Rahmens (15) federnd in die entgegengesetzte Ecke (14b) der Ausnehmung (14) gedrückt wird, während der Rahmen (15) die eine Kugel oder den einen Zylinder (16a) von den Wänden der Ausnehmung (14) fernhält.

5. Drehzahlwandler nach Anspruch 4, dadurch gekennzeichnet, daß die jeweiligen Reversierringe (17) hydraulisch oder pneumatisch betätigt werden und die hydraulische oder pneumatische Steuervorrichtung (3) für die beiden exzentrischen Scheiben (2a, 2b) hydraulisch oder pneumatisch damit gekoppelt sind.

6. Drehzahlwandler nach einem der Ansprüche 1-5, dadurch gekennzeichnet, daß die exzentrischen Scheiben (2a, 2b) jeweils durch eine kreisförmige exzentrische Scheibe gebildet sind, die mit der Antriebswelle (1) drehfest verbunden sind, wobei die Scheibe in einer zur Mittellinie der Antriebswelle (1) senkrechten Richtung verschiebbar ist, während, unter Zwischenfügung von Wälz- oder Radiallagern (21) wenigstens ein Ring (32) auf jeder exzentrischen Scheibe (2a, 2b) vorhanden ist, der sich nicht dreht und dynamisch mit den Kurbelarmen (5) der jeweiligen Umfangseinheiten (4a, 4b) verbunden ist, wobei die in der Antriebswelle (1) enthaltene hydraulische oder pneumatische Steuereinheit (3) für die beiden exzentrischen Scheiben (2a,, 2b) zwei Kolben/Zylinderanordnungen (3) aufweist, die sich senkrecht zur Mittellinie der Antriebswelle (1) erstrecken, wobei jede Steuervorrichtung (3) eine der beiden exzentrischen Scheiben (2a, 2b) in entgegengesetzten Richtungen steuert, wobei der Kolben (22) der jeweiligen Kolben/Zylinderanordnungen (3) mit Kolbenstangen (24, 25) versehen ist, die sich auf entgegengesetzten Seiten des Kolbens (22) in Richtung der Mittellinie der jeweiligen Zylinder oder Präzisionsbohrungen (23) erstrecken, wobei eine vorab zusammengedrückte Feder (26) in dem Zylinder (23) der jeweiligen Kolben/Zylinderanordnungen (3) aufgenommen ist, welche den Kolben (22) in eine Position drückt, in der die exzentrischen Scheiben (2a, 2b) sich in einer neutralen Position befinden, und wobei jeder Zylinder (23) mit zwei Kanälen (28, 29 bzw. 28a, 29a) verbunden ist, die auf gegenüberliegenden Seiten des Kolbens (22) in den Zylinder (23) münden und jeweils über in der Antriebswelle (1) ausgebildete Bohrungen (28, 29 bzw. 28a, 29a) mit den Quellen (30, 31) für das hydraulische oder pneumatische Druckmedium verbunden sind, mittels derer die Position des Kolbens (22) in dem Zylinder (23) und damit die Exzentrizität der exzentrischen Scheiben (2a, 2b) gesteuert werden kann.

7. Drehzahlwandler nach Anspruch 6, dadurch gekennzeichnet, daß die Kanäle (29, 29a), die in den Raum des Zylinders (23) münden, in dem die Feder (26) angeordnet ist, mit einer ersten Druckmediumquelle (30) und die Kanäle (28, 28a), die in den Raum des Zylinders (23) münden, der auf der anderen Seite des Kolbens (22) liegt, mit einer zweiten Druckmediumquelle (31) verbunden sind, wobei die erste Druckmediumquelle (30) einen konstanten Grunddruck liefert, der die exzentrischen Scheiben (2a, 2b) in die neutrale Position vorspannt, und die zweite Druckmediumquelle (31) einen variablen, regelbaren Druck hat, durch den das Ausmaß der Exzentrizität der exzentrischen Scheiben (2a, 2b) gesteuert werden kann.

## Revendications

1. Variateur de vitesse comprenant un arbre menant (1) possédant au moins une paire de disques excentriques (2a, 2b) dont l'excentricité peut être modifiée, même pendant le fonctionnement, d'une position neutre d'excentricité nulle à une valeur maximale à l'aide d'un dispositif de commande (3) incorporé à l'arbre menant (1), les excentricités des disques respectifs (2a, 2b) étant opposées mutuellement, alors que plusieurs unités circonférentielles (4a, 4b) sont placées le long d'un cercle primitif (S) dont le centre coïncide avec l'axe central (H1) de l'arbre menant (1) et qui est disposé dans un plan ou au voisinage d'un plan dans lequel les disques excentriques peuvent osciller pendant le fonctionnement, les unités circonférentielles (4a, 4b) comportant chacune un bras de manivelle (5) qui peut être entraîné, afin qu'il oscille, par l'un des disques excentriques (2a, 2b), les bras de manivelle (5) des unités circonférentielles respectives (4a, 4b) étant raccordés chacun dynamiquement à un arbre de sortie (9) par l'intermédiaire d'un système d'entraînement unidirectionnel (6) constitué d'un système à volant (6), par l'intermédiaire d'arbres intermédiaires respectifs (7) et d'une transmission (8) ayant un rapport fixe de transmission, caractérisé en ce que
- le dispositif de commande (3) des disques excentriques (2a, 2b), incorporé à l'arbre menant (1), a une construction hydraulique ou pneumatique qui est raccordée pendant le fonctionnement à des sources (30, 31) de fluide hydraulique ou pneumatique placées à l'extérieur de l'arbre menant (1), et
- les systèmes respectifs d'entraînement unidirectionnel (6a, 6b, 6c, 6d) sont réversibles en ce qu'ils comprennent un système (6) à volant à double effet qui est destiné à entraîner les arbres intermédiaires respectifs (7) dans un premier sens d'entraînement et dans un second sens opposé d'entraînement, les systèmes respectifs d'entraînement unidirectionnel (6a, 6b, 6c, 6d) étant réversibles uniquement lorsque la vitesse de rotation de l'arbre de sortie (9) est nulle.

2. Variateur de vitesse selon la revendication 1, caractérisé en ce que le dispositif hydraulique ou pneumatique de commande (3) des disques excentriques (2a, 2b) est couplé aux systèmes respectifs d'entraînement unidirectionnel (6a, 6b, 6c, 6d) de manière que ces systèmes ne soient réversibles que lorsque les disques excentriques (2a, 2b) sont dans la position neutre.

3. Variateur de vitesse selon la revendication 1 ou 2, caractérisé en ce que chaque unité circonférentielle (4a, 4b) comprend au moins deux systèmes réversibles d'entraînement unidirectionnel (6a, 6b et 6c, 6d respectivement).

4. Variateur de vitesse selon l'une quelconque des revendications 1 à 3, caractérisé en ce que chaque système réversible d'entraînement unidirectionnel (6a, 6b, 6c, 6d) comporte un anneau externe (10) portant un bras associé de manivelle (5) et un anneau interne (11) raccordé à un arbre intermédiaire associé (7) afin qu'il soit retenu en rotation par rapport à l'arbre, alors que l'anneau externe (10) et l'anneau interne (11), par leur surface circonférentielle interne et externe respectivement, partagent au moins partiellement une surface circonférentielle de contact (13) qui a des cavités (14) ayant une section pratiquement en losange, en élévation latérale dans un plan de coupe perpendiculaire à l'axe central de l'arbre intermédiaire associé (7), chaque cavité (14) logeant un cadre (15) portant deux cylindres ou billes (16a, 16b) supportés élastiquement, chaque cadre (15) ayant deux positions fixes dans une cavité (14) qui peuvent être fixées par un anneau d'inversion (17), si bien que, dans une première position, l'une des billes ou l'un des cylindres (16a) du cadre est repoussé élastiquement dans un coin (14a) de la cavité (14), ce coin (14a) étant délimité par l'anneau externe (10) et l'anneau interne (11), alors que le cadre (15) maintient l'autre bille ou cylindre (16b) à distance des parois de la cavité (14), et, dans une seconde position, l'autre bille ou cylindre (16b) du cadre (15) est repoussé élastiquement dans le coin opposé (14b) de la cavité (14) lorsque le cadre (15) maintient la première bille ou le premier cylindre (16a) à distance des parois de la cavité (14).

5. Variateur de vitesse selon la revendication 4, caractérisé en ce que le fonctionnement des anneaux respectifs (17) d'inversion est réalisé hydrauliquement ou pneumatiquement, et le dispositif hydraulique ou pneumatique de commande (3) de la paire de disques excentriques (2a, 2b) est couplé hydrauliquement ou pneumatiquement à ceux-ci.

6. Variateur de vitesse selon l'une quelconque des revendications 1 à 5, caractérisé en ce que les disques excentriques (2a, 2b) sont formés chacun par un disque excentrique circulaire raccordé a l'arbre menant (1) de manière qu'ils ne puissent pas tourner par rapport à lui, le disque étant destiné à être déplacé en direction perpendiculaire à l'axe central de l'arbre menant (1) alors que, avec interposition de paliers à rouleau ou de coussinets (21), un anneau au moins (32) est présent sur chaque disque excentrique (2a, 2b), cet anneau (32) ne tournant pas et étant raccordé dynamiquement aux bras de manivelle (5) des unités circonférentielles respectives (4a, 4b), le dispositif hydraulique ou pneumatique de commande (3) de la paire de disques excentriques (2a, 2b), incorporé à l'arbre menant (1), comporte deux vérins (3) disposé perpendiculairement à l'axe central de l'arbre menant (1), chaque dispositif de commande (3) assurant la commande d'un disque parmi la paire de disques excentriques (2a, 2b), dans des sens opposés, les pistons (22) des vérins respectifs (3) ayant des tiges (24, 25) disposées sur des côtés opposés du piston (22) dans la direction de l'axe central des cylindres respectifs ou d'alésages (23) de précision, un ressort préalablement comprimé (26) étant retenu dans le cylindre (23) d'un vérin respectif (3), le ressort (26) repoussant le piston (22) en position dans laquelle les disques excentriques (2a, 2b) sont en position neutre, et chaque cylindre (23) étant raccordé à deux canaux (28, 29 et 28a, 29a respectivement) débouchant chacun dans le cylindre (23), sur des côtés opposés du piston (22), et raccordés chacun, par des trous (28, 29 et 28a, 29a respectivement) formés dans l'arbre menant (1) aux sources d'un fluide hydraulique ou pneumatique sous pression (30, 31) par lesquelles la position, du piston (22) dans le cylindre (23), et donc l'excentricité des disques excentriques (2a, 2b) peuvent être réglées.

7. Variateur de vitesse selon la revendication 6, caractérisé en ce que les canaux (29, 29a) débouchant dans l'espace (23) du cylindre dans lequel est disposé le ressort (26) sont connectés à une première source (30) d'un fluide sous pression et les canaux (28, 28a) débouchant dans l'espace (23) du cylindre placé de l'autre côté du piston (22) sont reliés à une seconde source de fluide sous pression (31), la première source (30) de fluide sous pression donnant une pression fondamentale constante qui rappelle les disques excentriques (2a, 2b) en position neutre et la seconde source de fluide sous pression (31) ayant une pression variable réglable grâce à laquelle la valeur de l'excentricité des disques excentriques (2a, 2b) peut être réglée.
